(19) Europäisches Patentamt
European Patent Office
Office européen des brevets

(11) **EP 2 045 112 B1**

(12) **FASCICULE DE BREVET EUROPEEN**

(45) Date de publication et mention
de la délivrance du brevet:
**09.06.2010 Bulletin 2010/23**

(51) Int Cl.:
***B60K 23/04*** *(2006.01)* ***B60W 10/20*** *(2006.01)*
***B60W 10/12*** *(2006.01)*

(21) Numéro de dépôt: **08305591.3**

(22) Date de dépôt: **25.09.2008**

(54) **Systéme de gestion d'adhérence d'une paire de roues motrice de véhicule automobile**

System zur Regelung der Bodenhaftung eines Kraftfahrzeug-Antriebsradsatzes

System for controlling the grip of a pair of automobile drive wheels

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **01.10.2007 FR 0757987**

(43) Date de publication de la demande:
**08.04.2009 Bulletin 2009/15**

(73) Titulaire: **Renault S.A.S.
92100 Boulogne-Billancourt (FR)**

(72) Inventeurs:
• **Planelles , Mickael
78114, Magny les Hameaux (FR)**
• **Debernard, Eric
78960, Voisins (FR)**
• **Meyrignac, Jean-Guillaume
92380, Garches (FR)**
• **Portaz, Christophe
78220, Viroflay (FR)**

(56) Documents cités:
**EP-A- 1 659 385        WO-A-02/08048
WO-A-2007/103915     GB-A- 2 140 104**

## Description

L'invention concerne le domaine des systèmes de gestion de l'adhérence d'une paire de roues motrices d'un véhicule automobile.

Les roues motrices sont généralement entraînées par paires par un différentiel permettant à l'une des roues d'aller légèrement plus vite que l'autre tout en équilibrant le couple moteur sur les deux roues motrices. Cela permet au véhicule de tourner ou de s'adapter à des pneumatiques d'usures différentes.

Lorsque l'une des roues motrices patine, sur une route humide par exemple, un différentiel classique transmet toute la puissance du véhicule sur la roue qui patine et celle qui adhère au sol reçoit le même couple que celle qui patine, c'est-à-dire un couple très faible. Le patinage de l'une des roues suffit à arrêter le véhicule même si l'autre roue adhère au sol.

Il existe des différentiels autobloquants qui permettent de limiter le glissement d'une des sorties du différentiel par rapport à l'autre. Ce type de différentiels augmente le couple transmis à la roue la plus lente et réduit dans la même proportion le couple transmis à la roue qui patine. L'inconvénient de ce type de différentiels est que le blocage d'une sortie par rapport à l'autre suppose qu'une des roues motrices ait commencé à patiner, c'est-à-dire que le véhicule a déjà commencé à perdre de l'adhérence. I1 est souhaitable de pouvoir agir avant que l'une des roues motrices ne patine.

Un autre inconvénient de ce type de différentiels est qu'en transférant du couple vers la roue la plus lente, le système dégrade la stabilité du véhicule dans les virages.

De plus, le fait d'établir un couplage entre les deux roues motrices provoque des efforts dissymétriques dans le mécanisme de direction et provoque une remontée de couple dans le volant. Cette perturbation du mécanisme de direction peut surprendre le conducteur. Si cette perturbation n'est pas compensée, elle provoque une déviation du véhicule.

Des systèmes d'antipatinage (ASR), des systèmes d'antiblocage des roues (ABS), ou des systèmes de contrôle de la stabilité de la trajectoire du véhicule (ESP), agissent soit sur le frein de la roue qui patine ou qui glisse, soit sur le système d'injection du moteur d'entraînement du véhicule. Cela présente l'inconvénient supplémentaire de consommer plus d'énergie ou de limiter la puissance du moteur.

Plus généralement, l'utilisation de motorisations de plus en plus performantes met en évidence un déficit de motricité souvent rencontré sur les véhicules à traction avant, mais aussi sur les véhicules à propulsion ou à quatre roues motrices.

Le document GB-A-2140104 décrit un système selon le préambule de la revendication 1.

L'invention propose un système de gestion d'adhérence d'une paire de roues motrices d'un véhicule automobile qui remédie aux problèmes précédents et notamment qui intervient sur les roues motrices avant que ne se produise un patinage d'une des roues ou un risque de patinage excessif sans pour autant réduire la puissance d'entraînement du véhicule.

Selon l'invention, le système de gestion d'adhérence d'une paire de roues motrices d'un véhicule automobile, comprend deux capteurs aptes à mesurer un couple d'enroulement résistant, apparaissant sur chacune des deux roues motrices et dû au contact de la roue avec le sol lors du déplacement du véhicule. Le système comprend un différentiel piloté par un calculateur relié aux capteurs et apte à calculer un taux de couplage entre deux sorties du différentiel vers lesdites roues en fonction des couples d'enroulement résistants mesurés.

Lorsque l'une des roues motrices traverse une zone de moindre adhérence, l'effort exercé par la route sur la roue motrice est modifié, et en particulier la résistance à l'enroulement. Pour que la roue reste adhérente à la route, cette résistance à l'enroulement doit être supérieure au couple d'entraînement de la roue demandé par le véhicule. Le fait de mesurer directement le couple d'enroulement résistant permet de détecter un risque de glissement de la roue avant qu'une situation non souhaitée ne se produise. Le fait d'agir sur le taux de blocage du différentiel réduit le couple d'entraînement exercé par le véhicule sur la roue de moindre adhérence et augmente celui exercé sur la roue d'adhérence plus élevée. Un tel système permet de gérer l'adhérence des roues sans agir sur un frein, sans ralentir le moteur et donc en conservant globalement la puissance d'entraînement du véhicule.

Selon l'invention, le système comprend un moyen de détermination du couple moteur exercé sur la couronne du différentiel et un moyen de détermination des couples de freinage exercés sur chacune des roues motrices. Le calculateur est relié aux deux moyens de détermination précités et comprend un moyen de calcul d'un couple d'enroulement moteur nominal de chaque roue correspondant à la moitié du couple moteur diminué du couple de freinage exercé sur ladite roue et un moyen de comparaison de la différence entre les couples d'enroulement moteur nominaux et résistants, avec un seuil de décrochement

Un tel système peut définir le taux de couplage par rapport à un seuil de décrochement. Lorsque le seuil de décrochement est positif, le système peut agir dès que le couple d'enroulement moteur s'approche du couple résistant, avant que ne se produise un glissement. Un seuil de décrochement positif convient à une situation de faible niveau d'adhérence et évite que l'une des roues se mette à patiner. Lorsque le seuil de décrochement est négatif, le système tolère un léger glissement de la roue. Cette situation convient pour les cas où la sécurité n'est pas en cause. C'est le cas lorsque le véhicule est en ligne droite, un seuil de décrochement négatif permet de maximiser la motricité du véhicule. Cela peut être également le cas dans un virage où un léger glissement peut être toléré afin de réduire les perturbations engendrées dans le mécanisme de direction.

Avantageusement, le moyen de détermination du couple moteur comprend une cartographie mémorisée de la valeur du couple moteur en fonction de paramètres d'état d'un groupe motopropulseur du véhicule, comprenant un moteur et une transmission.

Avantageusement, au moins un capteur du couple d'enroulement résistant (My) comprend un palier à roulement à deux chemins de roulement monté entre une des roues motrices et un porte fusée correspondant, ledit capteur étant apte à déterminer au moins les efforts (Fx, Fz) exercés dans le plan de la roue, au contact de la roue avec le sol lors du déplacement du véhicule.

Selon une variante, le calculateur comprend un moyen de limitation du taux de couplage du différentiel en fonction de l'état dynamique du véhicule. L'état dynamique du véhicule comprend notamment la vitesse du véhicule, les accélérations transversales et longitudinales du véhicule, ainsi que la vitesse de lacet. Le fait de limiter le taux de couplage permet de réduire les perturbations dans le mécanisme de direction dans les situations de conduite où une telle perturbation dégraderait la sécurité. Lorsque le véhicule est en train de manoeuvrer, il est préférable de ne pas limiter le taux de couplage car la remontée de couple dans le mécanisme de direction informe le conducteur. En revanche, à vive allure, une perturbation soudaine dans le mécanisme de direction peut être très dangereuse. Le fait de limiter ou pas le taux de couplage en fonction de l'état dynamique du véhicule permet d'améliorer le confort de conduite sans dégrader la sécurité.

Selon un autre mode de réalisation, le système est destiné à une paire de roues motrices directrices. Il comprend un dispositif d'assistance de direction. Le calculateur comprend une cartographie mémorisée des efforts supplémentaires exercés sur la direction engendrés par le couplage du différentiel. Le dispositif d'assistance est relié au calculateur et compense lesdits efforts supplémentaires. Le fait que le système agisse sur l'assistance de direction pour compenser la part des remontées de couple vers la direction qui est due au couplage du différentiel permet de supprimer ce type de perturbations sans pour autant supprimer les remontées de couple qui seraient dues à d'autres causes et qui peuvent fournir une information utile au conducteur sans mettre en péril la sécurité. C'est le cas notamment des remontées de couple vers le mécanisme de direction lorsque le potentiel maximal d'effort transversal d'un pneumatique est atteint. Dans ce cas, le couple d'autoalignement des roues directrices chute et le conducteur le ressent dans la direction. C'est également le cas lorsque l'une des roues présente un balourd qui provoque des efforts alternatifs dans la direction.

Avantageusement, le capteur apte à mesurer le couple d'enroulement résistant est en outre apte à mesurer au moins les efforts exercés sur la roue directrice correspondante dans un plan parallèle à la route, au contact de la roue avec le sol lors du déplacement du véhicule, ainsi qu'un couple s'opposant au braquage de ladite roue. Un tel capteur fournit une information sur les efforts créant une remontée de couple vers la direction. Cette information peut être utilisée pour agir sur un organe ayant un effet opposé avant que la remontée de couple n'ait commencé à provoquer une déviation du véhicule. L'organe ayant un effet opposé peut être un frein, un différentiel ou un moteur d'assistance de direction.

Selon une variante, le palier à deux chemins de roulement comprend des moyens pour mesurer le torseur des efforts (Fx, Fy, Fz, Mx, My, Mz) exercés par la roue sur le porte-fusée.

D'autres caractéristiques et avantages de l'invention apparaîtront à la lecture de la description détaillée de quelques modes de réalisation pris à titre d'exemples non limitatifs et illustrés par le dessin annexé, sur lequel :

- la figure 1 est une illustration schématique en vue de devant d'une partie d'un train de roues motrices et directrices d'un véhicule ;
- la figure 2 est une illustration en vue de dessus du même train de roue en position de braquage ; et
- la figure 3 est une illustration de différents blocs de calcul pouvant être utilisés par des systèmes de gestion d'adhérence selon l'invention.

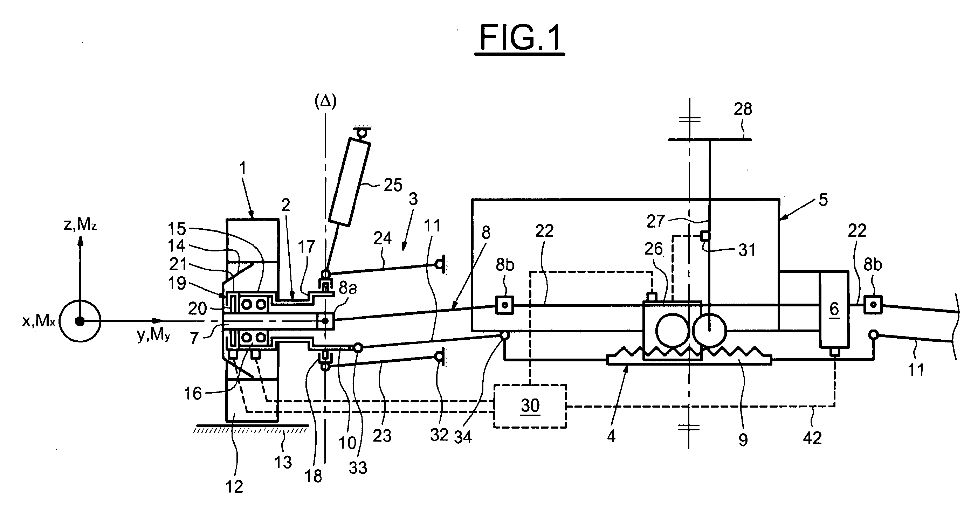

La figure 1 illustre une roue de droite 1 du véhicule. En effet, dans le système d'axes illustré, X correspond à l'axe principal du véhicule et est orienté de l'arrière vers l'avant du véhicule, Y correspond à une direction horizontale et est orienté dans l'axe de rotation de la roue 1 vers l'intérieur du véhicule, et Z est la direction verticale ascendante.

Les couples ou les angles de pivotement de la roue 1 autour de l'axe Z sont appelés couples ou angles de braquage ; les couples ou angles de pivotement de la roue autour de l'axe Y sont appelés des couples ou des angles d'enroulement ; les couples ou angles de pivotement de la roue autour de l'axe X sont appelés des couples ou angles de carrossage.

Le train de roues comprend, outre la roue de droite 1 mobile autour de l'axe Y et un porte-fusée 2 mobile autour d'un axe Δ sensiblement vertical. Un système de suspension 3, un mécanisme de direction 4 et un groupe motopropulseur 5 sont également représentés. Le groupe motopropulseur 5 comprend un différentiel 6 relié à un arbre d'entraînement 7 de la roue 1 par un système de cardan 8. Le mécanisme de direction 4 comprend une crémaillère de direction 9 reliée à un bras de levier 10 du porte-fusée 2 par un système de biellettes 11.

La roue 1 comprend un pneumatique 12 destiné à être en contact avec le sol 13 et une jante 14 fixée sur l'arbre d'entraînement 7. Le porte-fusée 2 comprend un moyeu horizontal 15 recevant un palier 16 à deux chemins de roulement monté à rotation sur l'arbre d'entraînement 7. Le porte-fusée 2 comprend également une portion sensiblement verticale 17 montée à rotation dans un corps de suspension 18 de manière à être libre en rotation autour de l'axe Δ, lorsque le système de biellettes 11 agit sur le bras de levier 10.

La roue droite est également équipée d'un système de freinage 19 comprenant par exemple un disque 20 solidaire de l'arbre d'entraînement 7 et des mâchoires 21 solidaires du porte-fusée 2. Le système de cardan 8 comprend un premier demi-cardan 8a situé à l'intersection de l'axe de l'arbre d'entraînement 7 et de l'axe de braquage Δ. Le système de cardan 8 comprend également un deuxième demi-cardan 8b situé sur une partie d'un arbre de transmission solidaire du différentiel 6.

Le corps de suspension 18 est relié par un triangle de suspension supérieur 24 et un triangle de suspension inférieur 23 au châssis du véhicule de manière que le corps de suspension 18 soit mobile verticalement le long de l'axe de braquage Δ. Un amortisseur 25 permet d'amortir le débattement du corps de suspension 18.

Le palier à roulement 16 est un palier à deux chemins de roulement équipé de deux séries de jauges de contrainte. La disposition de ces jauges de contrainte ainsi que la manière dont les informations tirées de ces jauges de contrainte sont échantillonnées et traitées, sont décrites dans la demande de brevet français FR 2 869 966 (SNR Roulements) à laquelle on pourra se référer pour plus de précisions. Est notamment décrit la manière de déterminer, à partir des jauges de contrainte, le torseur des efforts exercés par la bague intérieure du roulement sur la bague extérieure.

Un tel palier est utilisé pour déterminer le torseur des efforts exercés par le sol 13 sur le pneumatique 12. Le pneumatique 12 est en effet en contact sur le sol 13 par toute une surface dont chaque point subit des efforts d'intensité et de direction différents d'un point à l'autre. La résultante des efforts comprend une force Fz destinée à compenser le poids du véhicule, une force Fy destinée à compenser par exemple la force centrifuge lorsque le véhicule tourne et un effort Fx s'opposant à l'accélération ou au freinage du véhicule. Le contact entre le sol 13 et le pneumatique 12 exerce également un couple Mx qui tend à maintenir le plan de la roue 1 sensiblement vertical et à s'opposer à un pivotement de carrossage ; un couple My dû à la déformation dissymétrique d'une partie avant et d'une partie arrière du pneumatique, et qui s'oppose à une rotation d'enroulement de la roue 1 ; et un couple Mz qui s'oppose au braquage de la roue 1 autour de l'axe Δ.

On va maintenant décrire le mécanisme de direction 4. Celui-ci comprend, outre la crémaillère 9, un moteur d'assistance 26 et une colonne de direction 27 reliée au volant de direction 28 actionné directement par le conducteur. Dans l'exemple illustré, la colonne 27 comprend un engrenage coopérant avec la crémaillère 9 et le moteur d'assistance 26 engrène avec la crémaillère 9 de manière parallèle à la colonne 27. Ainsi, l'entraînement de la crémaillère 9 est le cumul du couple exercé par le conducteur sur le volant 28 et du couple généré par le moteur d'assistance 26. Des systèmes d'amortissement des vibrations non représentés peuvent être intercalés entre la colonne de direction 27 et le volant 28.

Dans une variante, le moteur d'assistance 26 est intégré le long de la colonne de direction 27 ou bien situé en extrémité de la colonne de direction 27 de sorte les couples exercés par le conducteur et par le moteur d'assistance 26 sont combinés avant le système d'engrenage avec la crémaillère 9.

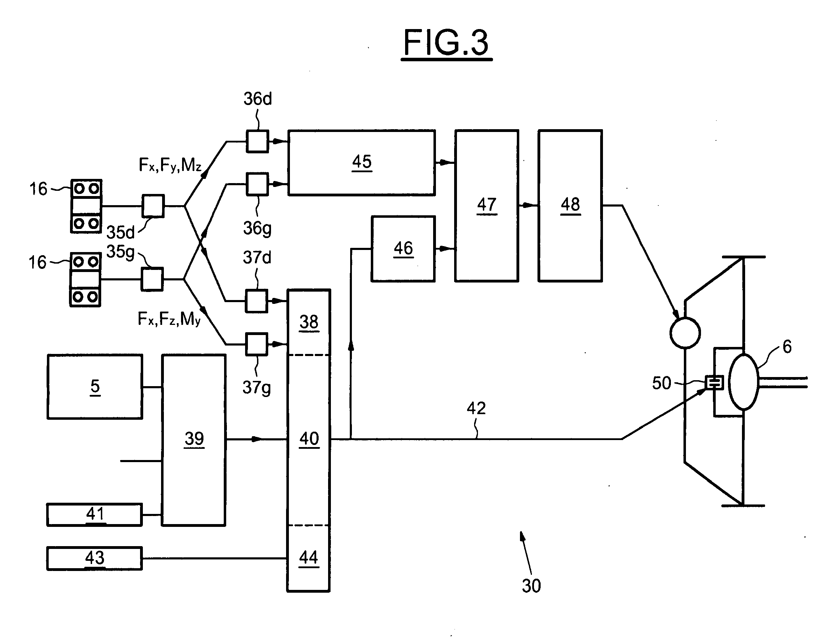

Le différentiel 6 est du type différentiel piloté. Ce différentiel comprend une couronne, non représentée, reliée au groupe motopropulseur et deux sorties reliées aux arbres de transmission 22 de chacune des roues. Ce type de différentiel comprend également un dispositif 50 de blocage ou de couplage entre les deux arbres de transmission des deux roues, illustré en figure 3. Le dispositif 50 est actionné selon une consigne de pilotage du différentiel.

Un calculateur 30 illustré en pointillés sur la figure 1 est relié au différentiel 6 de manière à communiquer au différentiel le taux de couplage à exécuter. Le calculateur 30 est également relié au moteur d'assistance 26 de manière à communiquer une correction d'assistance à ajouter ou retrancher au couple d'assistance qu'aurait généré le moteur d'assistance 26 s'il n'avait été relié qu'à un capteur d'angle 31 situé sur la colonne de direction 27. Le calculateur 30 est également relié au palier 16 et peut contribuer à la détermination du torseur précédemment décrit. Le calculateur 30 est également relié au dispositif de freinage ainsi qu'au groupe motopropulseur 5.

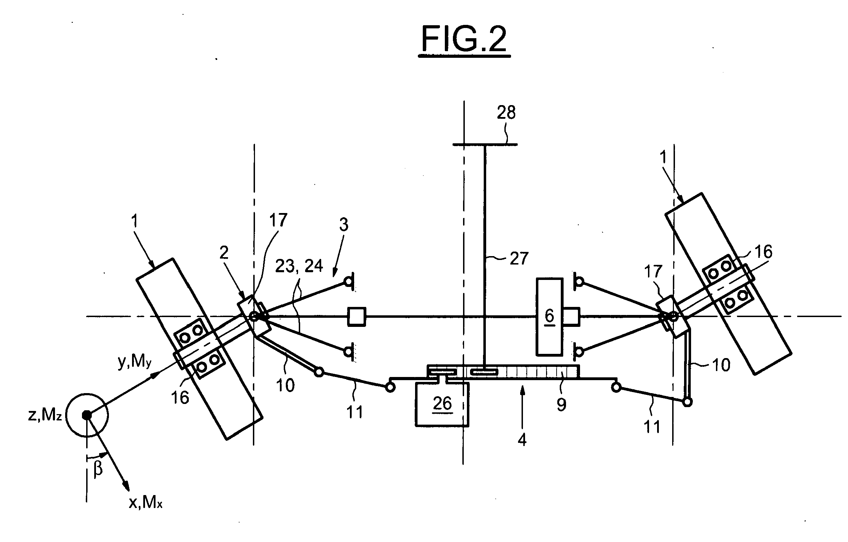

Sur la figure 2, est illustrée la forme triangulaire des triangles de suspension 23 et 24. De plus, la crémaillère 9 est illustrée en position de braquage de manière à pousser ou tirer les bras de levier 10 afin que chacune des roues 1 tournent d'un même angle de braquage β. Le porte-fusée 2 étant flottant verticalement, les vibrations générées soit par le moteur 5, soit par le sol 13, sont transmises à la fois par des articulations 32 des triangles de suspension 23 et 24, par des articulations 33 du bras de levier 10 avec les biellettes 11 et par des articulations 34 des biellettes 11 avec la crémaillère 9 (voir figure 1). Pour limiter une partie des vibrations, notamment de haute fréquence, les articulations 32, 33 et 34 peuvent comprendre des éléments élastiques et/ou des éléments amortisseurs. Une perturbation engendrée par le sol 13 sur la roue 1 se propage le long du mécanisme de direction 4 jusqu'au volant 28. Les éléments d'élasticité et/ou d'amortissement contribuent à réduire l'intensité de ces perturbations et introduisent également un retard dans la propagation du couple de perturbation.

On va à l'aide de la figure 3, décrire différents modes de réalisation de l'invention selon que certaines parties des blocs de calcul qui y sont illustrés sont utilisées ou non. Le calculateur 30 comprend un moyen de recombinaison 35d du torseur exercé sur le palier 16 de la roue de droite et un moyen de recombinaison 35g du torseur exercé sur le palier 16 de la roue de gauche. Le mode de fonctionnement des moyens de recombinaison 35d et 35g est décrit dans la demande FR 2 869 966 et est connu de l'homme du métier.

Le calculateur comprend également des moyens de filtrage 36d et 36g correspondant aux deux roues et concernant la partie des torseurs ayant une incidence sur le braquage des roues. Il s'agit en particulier du filtrage des efforts Fx, Fy et Mz. Le calculateur comprend également des moyens de filtrage 37d et 37g correspondant pour chacune des deux roues au filtrage des efforts ayant une incidence sur l'enroulement des roues. Il s'agit notamment du filtrage des efforts Fx, Fz et My.

Le calculateur comprend des moyens de calcul 38 des couples d'enroulement résistants Cr de la roue droite et de la roue gauche. Ces couple sont quasiment égaux, au filtrage près, à Myd et à Myg mesurés. Le calculateur comprend une cartographie 39 de la valeur du couple moteur en fonction des paramètres d'état du groupe motopropulseur 5. Ces paramètres peuvent comprendre la température du bloc moteur, la vitesse du vilebrequin, la position d'une pédale d'accélérateur 51, le rapport de transmission, la pression d'alimentation des freins, les requêtes de modification du freinage et/ou de l'injection par les systèmes de type ASR, ABS ou ESP. La cartographie mémorisée permet d'établir la correspondance entre l'ensemble de ces paramètres etv la valeur du couple moteur entraînant la couronne de différentiel, et/ou la valeur des couples de freinage exercés sur chacune des roues motrices.

Dans une partie 40 du calculateur, est calculé le couple d'enroulement moteur nominal pour chacune des roues, qui correspond à la moitié du couple moteur Cm entraînant la couronne de différentiel, diminué pour chacune des roues du couple de freinage Cf correspondant. Si l'on ramène l'accélération du véhicule à l'accélération angulaire $\Omega''$ pour la roue considérée, les différents couples sont liés par l'équation suivante :

$$C_m/2 + C_r + C_f = I_{roue} \bullet \Omega''$$

Il s'en suit que lorsque la requête de couple moteur Cm/2 devient supérieure au couple résistant Cr admissible par le contact entre le pneumatique 12 et le sol 13, il devient nécessaire de bloquer le différentiel 6. Le calculateur comprend un seuil de décrochement mémorisé et un moyen de comparaison entre la différence entre les couples d'enroulement moteur nominaux Cm/2 et résistants Cr pour chacune des roues avec le seuil de décrochement. Le moyen de comparaison permet de déterminer le taux de couplage 42 du différentiel 6 de manière à transférer le couple moteur depuis la roue pour laquelle le couple résistant du contact pneu-sol est faible vers la roue motrice pour laquelle ledit couple résistant est élevé.

Grâce à la mesure directe du couple d'enroulement résistant dû au contact pneu-sol de chacune des roues, il est possible d'agir sur le couple moteur entraînant ladite roue avant que ce couple moteur ne fasse glisser ou patiner la roue. Toutefois, le seuil de décrochement peut être variable en fonction de l'état dynamique du véhicule, en effet, lorsque le véhicule est en ligne droite, un léger glissement peut être toléré, de même lorsque le véhicule est en manoeuvre, avec une vitesse très faible et des accélérations pouvant localement entraîner le glissement de la roue, un léger glissement est toléré. En revanche, à vitesse élevée ou bien dans des tournants, le seuil de décrochement enregistré permet d'agir avant que n'ait lieu un glissement. Une partie 44 du calculateur permet de limiter la consigne 42 de taux de couplage en fonction de reçu ou calculer par une partie 43 du calculateur.

On va maintenant décrire la partie du calculateur concernant l'assistance de direction. Une partie 45 reçoit les informations $F_x$, Fy et Mz des moyens de filtrage 36d et 36g. La partie 45 est munie d'une cartographie mémorisée qui comprend des paramètres définissant la géométrie du train de roues et du mécanisme de direction. La partie 45 calcule un « couple de remontée d'effort » correspondant à la résultante des effets sur la direction des efforts Fx, Fy et Mz de chacune des deux roues. Si la cartographie mémorisée est suffisamment précise, le couple de remontée d'effort calculé correspond sensiblement aux efforts réels transmis par le système de biellettes 11.

Une partie 46 du calculateur calcule, non pas la totalité des efforts remontés par le système de biellettes 11, mais uniquement la partie de remontée d'efforts supplémentaire qui est due au couplage du différentiel 6. La partie 46 comprend une cartographie mémorisée des efforts supplémentaires engendrés par le taux de couplage 42.

Une partie 47 du calculateur comprend une cartographie qui définit une stratégie de filtrage des remontées d'effort à compenser par le mécanisme d'assistance en fonction de l'état dynamique du véhicule. Ainsi selon les cas, il pourra être décidé de compenser uniquement le couple de remontée d'efforts calculé par la partie 46 ou bien la totalité du couple de remontée d'efforts calculée par la partie 45 ou bien une combinaison des deux.

Enfin, une partie 48 du calculateur permet de synchroniser la consigne de correction d'assistance générée par le calculateur en direction du moteur d'assistance avec l'effet sur la crémaillère de direction 9 des efforts mesurés par les roulements 16 une fois que ces efforts se sont propagés mécaniquement le long du système de biellettes 11. La partie 48 du calculateur 30 génère une consigne pour le moteur d'assistance 26 qui cumule le couple d'assistance nécessaire pour obtenir le braquage souhaité des roues, en l'absence de couple de perturbation, et le couple de correction d'assistance compensant une partie des remontées d'efforts.

Les différents modes de réalisation de l'invention correspondent au fait que certaines parties du moyen de mesure sont utilisées ou non. Ainsi, le moyen de détermination du couple d'enroulement moteur exercé sur chacune des roues pourrait utiliser d'autres moyens que les moyens 39 et 40 décrits, comme par exemple des jauges de contrainte sur les arbres de transmission 22.

**Revendications**

1. Système de gestion d'adhérence d'une paire de roues (1) motrices d'un véhicule automobile, comprenant deux capteurs (16) aptes à mesurer un couple d'enroulement résistant ($M_{yd}$, $M_{yg}$) apparaissant sur chacune des deux roues motrices et dû au contact de la roue (1) avec le sol (13) lors du déplacement du véhicule, un différentiel (6) piloté par un calculateur (30) relié aux capteurs (16) et apte à calculer un taux de couplage (42) entre deux sorties du différentiel (6) vers lesdites roues en fonction des couples d'enroulement résistants mesurés, **caractérisé en ce que** ledit système comprend un moyen de détermination du couple moteur exercé sur la couronne du différentiel (6) et un moyen de détermination des couples de freinage exercés sur chacune des roues motrices (1) ; le calculateur étant relié aux deux moyens de détermination précités et comprenant un moyen (38, 39) de calcul d'un couple d'enroulement moteur nominal de chaque roue correspondant à la moitié du couple moteur diminué du couple de freinage exercé sur ladite roue et un moyen de comparaison (40) de la différence entre les couples d'enroulement moteur nominaux et résistants, avec un seuil de décrochement.

2. Système selon la revendication 1 dans lequel le moyen de détermination du couple moteur comprend une cartographie (39) mémorisée de la valeur du couple moteur en fonction de paramètres d'état d'un groupe motopropulseur (5) du véhicule.

3. Système selon l'une quelconque des revendications précédentes, dans lequel au moins un capteur du couple d'enroulement résistant ($M_y$) comprend un palier (16) à roulement à deux chemins de roulement monté entre une des roues motrices (1) et un porte-fusée (2) correspondant, ledit capteur (16) étant apte à déterminer au moins les efforts ($F_x$, $F_z$) exercés dans le plan de la roue (1), au contact de la roue avec le sol (13) lors du déplacement du véhicule.

4. Système selon l'une quelconque des revendications précédentes, dans lequel le calculateur (30) comprend un moyen de limitation (44) du taux de couplage (42) du différentiel, en fonction de l'état dynamique (43) du véhicule.

5. Système selon l'une quelconque des revendications précédentes, destiné à une paire de roues motrices directrices, comprenant un dispositif d'assistance (26) de direction, le calculateur (30) comprenant une cartographie mémorisée (46) des efforts supplémentaires exercés sur la direction engendrés par le couplage du différentiel (42) ; le dispositif d'assistance (26) étant relié au calculateur (30) et compensant lesdits efforts supplémentaires.

6. Système selon l'une quelconque des revendications précédentes, dans lequel le capteur (16) apte à mesurer le couple d'enroulement résistant ($M_{yd}$, $M_{yg}$) est en outre apte à mesurer au moins les efforts ($F_x$, $F_y$) exercés sur la roue directrice correspondante dans un plan parallèle à la route, au contact de la roue avec le sol lors du déplacement du véhicule, ainsi qu'un couple ($M_{zd}$, $M_{zg}$) s'opposant au braquage de ladite roue.

7. Système selon les revendications 3 et 6 prises dans leur ensemble, dans lequel le palier (16) à deux chemins de roulement comprend des moyens pour mesurer le torseur des efforts ($F_x$, $F_{yd}$, $F_z$, $M_x$, $M_y$, $M_z$) exercés par la roue (1) sur le porte-fusée (2).

**Claims**

1. System for controlling the grip of a pair of driven wheels (1) of a motor vehicle, comprising two sensors (16) able to measure a resistive wind-up torque ($M_{yd}$, $M_{yg}$) that appears at each of the two driven wheels and is due to contact between the wheel (1) and the ground (13) as the vehicle moves along, a differential (6) controlled by a computer (30) connected to the sensors (16) and able to calculate a coupling ratio (42) between two outputs of the differential (6) to the said wheels as a function of the measured resistive wind-up torques, **characterized in that** the said system comprises a means of determining the driving torque applied to the crown wheel of the differential (6) and a means of determining the braking torques applied to each of the driven wheels (1); the computer being connected to the two aforementioned determining means and comprising a means (38, 39) of calculating a nominal driving wind-up torque for each wheel that corresponds to half the drive torque less the braking torque applied to the said wheel, and a comparison means (40) for comparing the difference between the nominal and resistive driving wind-up torques, with a decoupling threshold.

2. System according to Claim 1, in which the means of determining the driving torque comprise a stored map (39) of the value of the driving torque as a function of parameters concerning the state of a power train (5) of the vehicle.

3. System according to any one of the preceding claims, in which at least one sensor of the resistive wind-up torque ($M_y$) comprises a twin-raceway rolling bearing (16) mounted between one of the driven wheels (1) and a corresponding stub axle (2), the said sensor (16) being able to determine at least the forces ($F_x$, $F_z$) applied in the plane of the wheel (1), upon contact of the wheel with the ground (13) as the vehicle moves along.

4. System according to any one of the preceding claims, in which the computer (30) comprises a means (44) of limiting the coupling ratio (42) of the differential, as a function of the dynamic status (43) of the vehicle.

5. System according to any one of the preceding claims, intended for a pair of steered driven wheels, comprising a power-assisted steering device (26), the computer (30) comprising a stored map (46) of the additional forces applied to the steering as a result of the coupling of the differential (42); the power-assisted steering device (26) being connected to the computer (30) and compensating for the said additional forces.

6. System according to any one of the preceding claims, in which the sensor (16) able to measure the resistive wind-up torque ($M_{yd}$, $M_{yg}$) is also able to measure at least the forces ($F_x$, $F_y$) applied to the corresponding steered wheel in a plane parallel to the road, upon contact of the wheel with the ground as the vehicle moves along, and a torque ($M_{zd}$, $M_{zg}$) that opposes the steering of the said wheel.

7. System according to Claims 3 and 6 considered in combination, in which the twin-raceway bearing (16) comprises means for measuring the moment of the forces ($F_x$, $F_y$, $F_z$, $M_x$, $M_y$, $M_z$) applied by the wheel (1) to the stub axle (2).

**Patentansprüche**

1. System zur Regelung der Haftung eines Antriebsradpaares (1) eines Kraftfahrzeugs, mit zwei Sensoren (16), die ein Rollwiderstandsmoment ($M_{yd}$, $M_{yg}$) messen können, das an jedem der beiden Antriebsräder auftritt und von dem Kontakt des Rads (1) mit dem Boden (13) bei Fahrt des Fahrzeugs herrühren, einem Differenzial (6), das durch einen mit den beiden Sensoren (16) verbundenen Rechner (30) gesteuert wird, der einen Kopplungsgrad (42) zwischen zwei Ausgängen des Differenzials (6) zu den Rädern als Funktion der gemessenen Rollwiderstandsmomente berechnen kann, **dadurch gekennzeichnet, dass** das System ein Mittel zur Ermittlung des auf das Differenzial-(6)-Tellerrads ausgeübten Antriebsmoments und ein Mittel zur Ermittlung der auf jedes der Antriebsräder (1) ausgeübten Bremsmomente umfasst; wobei der Rechner mit den beiden oben genannten Ermittlungsmitteln verbunden ist und ein Mittel (38, 39) zur Berechnung eines Nennantriebsrollmoments jedes Rads, das der Hälfte des um das auf das Rad ausgeübte Bremsmoment verringerten Antriebsmoments entspricht, und ein Mittel (40) zum Vergleich der Differenz zwischen den Nennantriebsrollmomenten und Rollwiderstandsmomenten mit einer Ablöseschwelle umfasst.

2. System nach Anspruch 1, wobei das Mittel zur Ermittlung des Antriebsmoments ein gespeichertes Kennfeld (39) des Werts des Antriebsmoments als Funktion von Zustandsparametern eines Antriebsaggregats (5) des Fahrzeugs umfasst.

3. System nach einem der vorhergehenden Ansprüche, wobei mindestens ein Sensor des Rollwiderstandsmoments ($M_y$) ein Wälzlager (16) mit zwei Lagerlaufbahnen umfasst, das zwischen einem der Antriebsräder (1) und einem entsprechenden Achsschenkel (2) angebracht ist, wobei der Sensor (16) mindestens die in der Ebene des Rads (1) bei Kontakt des Rads mit dem Boden (13) bei Fahrt des Fahrzeugs ausgeübten Kräfte ($F_x$, $F_z$) ermitteln kann.

4. System nach einem der vorhergehenden Ansprüche, wobei der Rechner (30) ein Mittel (44) zur Begrenzung des Kopplungsgrads (42) des Differenzials als Funktion des dynamischen Zustands (43) des Fahrzeugs umfasst.

5. System nach einem der vorhergehenden Ansprüche, das für ein Paar gelenkte Antriebsräder bestimmt ist und einen Lenkungsverstärker (26) umfasst, wobei der Rechner (30) ein gespeichertes Kennfeld (46) der auf die Lenkung ausgeübten zusätzlichen Kräfte, die durch die Kopplung des Differenzials (42) erzeugt werden, aufweist; wobei der Lenkungsverstärker (26) mit dem Rechner (30) verbunden ist und die zusätzlichen Kräfte ausgleicht.

6. System nach einem der vorhergehenden Ansprüche, wobei der Sensor (16), der das Rollwiderstandsmoment ($M_{yd}$, $M_{yg}$) messen kann, des Weiteren mindestens die bei Kontakt des Rads mit dem Boden bei Fahrt des Fahrzeugs auf das entsprechende gelenkte Rad in einer parallel zu der Straße verlaufenden Ebene ausgeübten Kräfte ($F_x$, $F_z$) sowie ein dem Einschlagen des Rads entgegenwirkendes Moment ($M_{zd}$, $M_{zg}$) messen kann.

7. System nach Anspruch 3 und 6 zusammengenommen, wobei das Lager (16) mit zwei Lagerlaufbahnen Mittel zum Messen der Dyname der auf das Rad (1) auf dem Achsschenkel (2) ausgeübten Kräfte ($F_x$, $F_y$, $F_z$, $M_x$, $M_y$, $M_z$) umfasst.

# FIG.1

FIG.2

EP 2 045 112 B1

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2140104 A

- FR 2869966